Europäisches Patentamt

European Patent Office

Office européen des brevets

(11) Publication number: **0 137 703**
**B1**

(12) EUROPEAN PATENT SPECIFICATION

(45) Date of publication of patent specification: **14.03.90**

(21) Application number: **84305942.9**

(22) Date of filing: **30.08.84**

(51) Int. Cl.⁵: **F 16 F 9/32, B 60 G 15/12, B 23 P 19/04**

(54) Method of servicing a vehicle air spring suspension strut.

(30) Priority: **14.09.83 US 531866**

(43) Date of publication of application:
**17.04.85 Bulletin 85/16**

(45) Publication of the grant of the patent:
**14.03.90 Bulletin 90/11**

(84) Designated Contracting States:
**DE FR GB IT**

(56) References cited:
**GB-A-1 060 560**
**GB-A-2 084 692**
**US-A-3 346 272**
**US-A-3 967 363**

(73) Proprietor: **GENERAL MOTORS CORPORATION**
**General Motors Building 3044 West Grand Boulevard**
**Detroit Michigan 48202 (US)**

(72) Inventor: **Pees, James Mitchell**
**634 Britton Drive**
**Dayton Ohio, 45429 (US)**
Inventor: **Fannin, Wayne Vincent**
**2098 Upper Bellbrook Road**
**Xenia Ohio 45385 (US)**

(74) Representative: **Denton, Michael John et al**
**Patent Section - Luton Office (F6) Vauxhall Motors Limited P.O. Box 3 Kimpton Road Luton Bedfordshire LU2 0SY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of servicing a vehicle air spring suspension strut as specified in the preamble of claim 1, for example as disclosed in GB—A—2 084 692.

In said prior disclosure, an elastomer air sleeve and mount assembly is disclosed for use in replacing a worn elastomer sleeve of the air spring of a suspension strut.

The present invention, which is likewise directed to the replacement of the elastomer sleeve of the air spring of a suspension strut, is concerned with simplifying the replacement procedure, potentially without removal of the strut from the vehicle.

To this end a method of servicing a vehicle air spring suspension strut in accordance with the present invention is characterised by the steps specified in the characterising portion of Claim 1.

With this method, only simple parts and hand tools are required to repair, rebuild or modify struts, and persons having moderate skills are able to effect strut repair or rebuild.

In a preferred procedure in accordance with the present invention, for on-board servicing of an air spring suspension strut the strut is freed only from its connection with the sprung portion of the vehicle, and is then telescopically collapsed and thereupon swung about a lower pivot connection on an unsprung portion of the vehicle to a service position. In this service position, and whilst the strut remains attached to the unsprung portion of the vehicle, the upper mount is removed from the strut, and an outer clamp securing the lower end of the elastomeric air sleeve to the dust tube of the strut is severed. This allows axial removal of the dust tube from the strut assembly, to expose an inner clamp securing the sleeve to the support tube of the strut. This inner clamp is subsequently severed by conventional tooling to permit axial removal of the worn elastomeric sleeve from the strut. The worn sleeve is discarded, and a replacement elastomeric air sleeve is installed over the support tube of the strut. Subsequently a specialized inner clamp ring having a constant diameter and providing optimized dust tube clearance is installed by the use of simple hand tooling to secure the sleeve to the support tube so that it is air-tight and will not interfere with the internal wall of the dust tube.

After the replacement sleeve has been attached to the support tube, the dust tube assembly is re-installed on the piston rod of the strut. The lower end of the air sleeve is fitted around the lower end of the dust tube, and is attached thereto by a conventional or specialized hose clamp to provide an air-tight connection. After the replacement air sleeve has been installed on the strut, the upper mount is re-installed on the piston rod of the strut and the strut is returned to an upright position. The upper mount is then re-attached to the sprung portion of the vehicle.

Since the amount position has not been changed, subsequent wheel alignment adjustments are not generally necessary. Conventional procedures are employed for adjusting the air pressure in the strut after sleeve replacement so that load levelling is assured.

In one preferred service procedure, the road wheel is removed from the wheel spindle assembly after the associated control arm has been elevated by a conventional jack. The strut is then detached from its upper connection to the vehicle and pivoted to the service position. The air sleeve is changed in the conversion as outlined above. The strut is then swung back to its upright position and re-connected by means of the upper mount to the vehicle body. The road wheel is subsequently re-mounted to the wheel spindle assembly and the jack removed so that the vehicle is then ready for use.

In the drawings:

Figure 1 is a front view, partially in section, of a portion of a vehicle including a suspension strut operatively mounted between a road wheel assembly and the vehicle body;

Figure 2 is a view generally similar to Figure 1 but with parts omitted for clarity showing the strut detached from the vehicle body and swung to a service position;

Figure 3 is a fragmentary longitudinal sectional view, with parts in elevation, showing the strut of Figures 1 and 2 being dismantled for service;

Figure 4 is a view of a portion of the strut of Figure 3, illustrating the installation of a new elastomeric air sleeve on to the strut;

Figure 5 is a cross-sectional view on the line 5—5 of Figure 4, in the direction of the arrows, illustrating the installation of a clamp ring for securing the air sleeve to the strut; and

Figures 6 and 7 are fragmentary sectional views, in the direction of the arrows, illustrating two different constructions for securing an air sleeve to the strut.

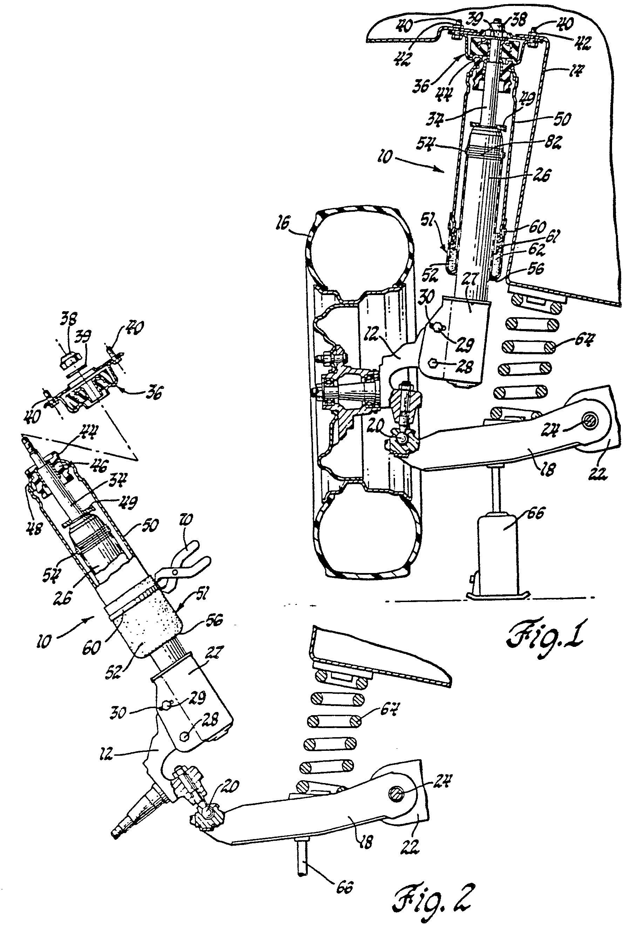

With reference now to the drawings, Figure 1 shows an air-adjustable telescopic suspension strut 10 operatively mounted between a wheel spindle and hub assembly 12 (providing a steering knuckle) and a mounting tower 14 formed in the bodywork of a vehicle. The spindle and hub assembly 12 rotatably supports a pneumatic road wheel 16 in a conventional manner, and is in turn supported on the outer end portion of a control arm 18 by a ball joint 20. The control arm 18 is pivotally mounted at its inboard end to the vehicle frame 22 or other supporting component by a pivot shaft 24.

The strut has a cylindrical outer support tube 26, which will usually be the reservoir tube, mounted at its lower end within a cylindrical bracket 27. The bracket 27 is attached by bolts 28 and 29 to the spindle and hub assembly 12. The wheel 16 can be pivoted on the bolt 29, and is secured in a selected position by tightening the bolt 29 when appropriately positioned in a lateral slot 30 in the hub assembly 12 for camber adjustment. The strut 10 is either a "wet build" or a "cartridge build" unit such as is described in US—A—4 276 971.

The strut 10 has conventional shock absorber components therein: it includes a valved piston 31 reciprocably movable within an oil-filled cylinder tube 32 in the strut, and a tubular piston rod 34 which extends upwardly from the piston through the capped upper end of the support tube, and is attached to the tower 14 by an upper mount 36. The end of the piston rod 34 is threaded to receiva a nut 38 which, in co-operation with a flat washer 39, secures the upper mount 36 to the piston rod. The mount is removably secured to the sheet metal tower 14 by attachment bolts 40 that extend through a flanged portion of the mount and through the sheet metal work of the tower to receive nuts 42.

Mounted adjacent the upper end of the piston rod 34 and on a shouldered portion thereof is a jounce bumper assembly 44 which is separable from the upper mount 36, as is best seen in Figure 2, and includes a cylindrical elastomeric bumper element 46 bonded at its internal diameter to a metallic mounting cap 48 which is seated on the shouldered portion of the rod and retained in this position by the upper mount 36 when the piston rod nut 38 has been threadedly fastened on to the end of the piston rod 34. The jounce bumper element 46 is a resilient cushion that is arranged to be contacted and deflected by a bumper plate 49 welded or otherwise secured to the top of the support tube, to check and cushion severe jounce motions.

A cylindrical dust tube 50 extends from attachment with the jounce bumper assembly 44 downwardly around and in concentric relationship to the support tube 26.

The strut 10 incorporates an air suspension spring 51 provided by a generally cylindrical elastomeric sleeve 52 having its inner, upper end connected to the upper end of the support tube by an annular steel clamping ring 54. This ring is a factory-installed 360° ring which during assembly is constricted mechanically or magneformed to ensure air sealing. From the clamping ring 54, the elastomeric air sleeve 52 closely follows the contour of the cylindrical support tube 26, and is reversely curved intermediate the ends thereof to form a rolling lobe 56. From the rolling lobe 56 the elastomer sleeve 52 extends upwardly to a large-diameter end portion fitted around the lower end of the dust tube 50. A second continuous clamping ring 60, similar to the clamping ring 54, secures the elastomer sleeve 52 to the lower end of the dust tube 50 in an air-tight manner.

An annular plastics guard element 61 is carried by the end of the dust tube 50 to prevent abrasion of the sleeve during operation.

A pneumatic chamber 62 is formed by a dust tube 50, the support tube 26, the elastomer air sleeve 52 and other components, and this chamber may be charged with pressurized air to provide a pneumatic spring for vehicle suspension purposes including load levelling. The pressure within the air spring of this unit may be controlled and varied by a system as disclosed in US—A—3 372 919.

Operatively mounted between the control arm 18 and the vehicle body is a helical suspension spring 64 supporting the vehicle body. Spring action is damped or checked by the shock absorber within the strut 10 to enhance vehicle ride. For vehicle levelling, the air spring 51, which is mounted in parallel with respect to the helical spring 64, is pressurized with air in accordance with load conditions to provide spring assist in levelling the vehicle body.

In the event that the air spring 51 has a worn sleeve 52 or other component (including an internal component of the strut) that requires service, the present invention provides for "onboard" repair.

In a preferred embodiment, a jack 66 is placed by the mechanic beneath the control arm 18, and the wheel assembly is raised by the jack to allow the road wheel 16 to be removed. After removal of the road wheel, the nuts 42 are removed from the upper mount 36 and the strut 10 is telescopically collapsed to a position in which there is sufficient clearance beneath the tower 14 to allow the strut to be swung outwardly on the ball joint 20 to the service position shown in Figure 2. The telescopic collapse is not specifically illustrated in the drawings. With the strut in the service position, the nut 38 is removed from the piston rod 34 so that the upper mount 36 can be removed. The outermost, lower clamping ring 60 connecting the sleeve 52 to the dust tube is then severed by a conventional cutting tool 70.

After the lower ring 60 has been severed and removed, the dust tube 50 is removed axially together with the jounce bumper assembly 44 from the remainder of the strut, as is best seen in Figure 3, to provide access to the inner clamping ring 54. The inner clamping ring 54 as thereby exposed is then manually severed, using the cutting tool 70, so that the elastomer sleeve 52 can be axially removed from the support tube 26 of the strut and discarded.

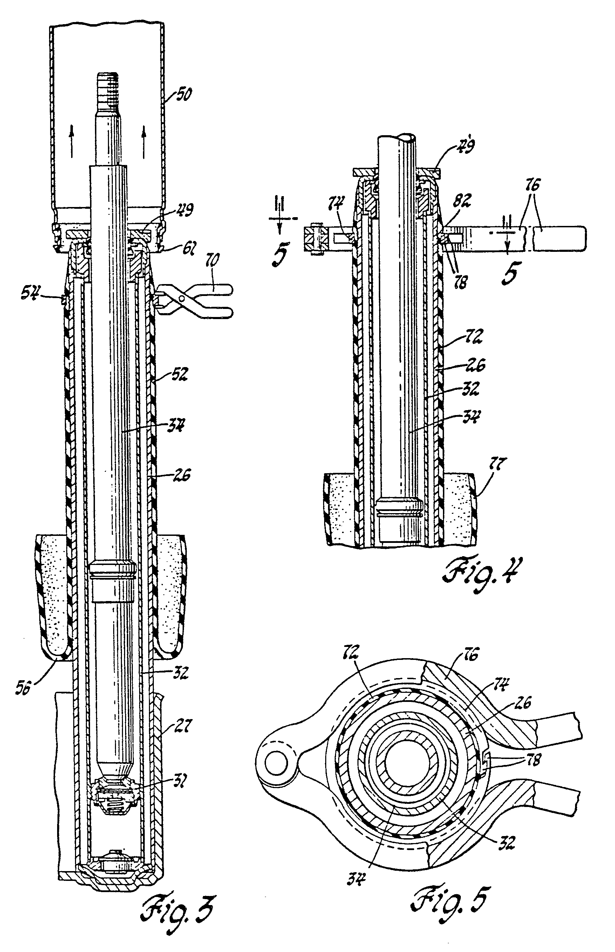

A new air sleeve 72, which is of the same construction as the worn sleeve, is then installed over the support tube 26, as shown in Figure 4. Thereupon, a steel clamp ring 74 of constant thickness and diameter is manually installed, preferably using pliers 76 for holding the clamping ring 74 and positioning it in place, as shown in Figure 4. The handles of the pliers are manually gripped to constrict the clamp ring 74 so that hooked ends 78 thereof are cammed into the interlocked position of Figure 5 to thereby lock and seal the upper end of the new air sleeve 72 to the support tube 26.

The clamp ring 74 gives substantially 360° circumferential contact with the air sleeve 72, which ensures sealing and adequate outer diametral clearance with respect to the inner wall of the dust tube 50 on the jounce and rebound strokes to prevent scraping and wear. A series of annular grooves 82 are formed in the support tube 26 to receive the deflected material of the air sleeve 72 and to provide improved retention of the air sleeve on the support tube.

After the clamp ring 74 has been installed, the dust tube 50 is re-installed over the support tube 26, with the jounce bumper assembly 44 mounted on the piston rod. A large-diameter lower end 77 of the air sleeve 72 is thereby fitted over the lower end of the dust tube 50. A lower clamp ring (not shown), which can be like that of Figure 5 but of a larger diameter to accommodate the dimensions of the dust tube 50, is then installed around the lower end of the air sleeve 72 to complete the installation thereof. The upper mount 36 is then fitted on to the upper end of the piston rod 34 and secured by means of the nut 38. The strut 10 can then be returned to its Figure 1 position and extended so that the mounting bolts 40 project through the bolt openings in the mounting tower 14. The nuts 42 are thereupon tightened on the bolts 40 to secure the strut in position. The road wheel assembly is then re-installed on the wheel spindle assembly and the jack 66 is retracted and removed, so allowing the vehicle to be driven after the pneumatic chamber of the suspension has been re-charged to a pressure as required by the prevailing load conditions.

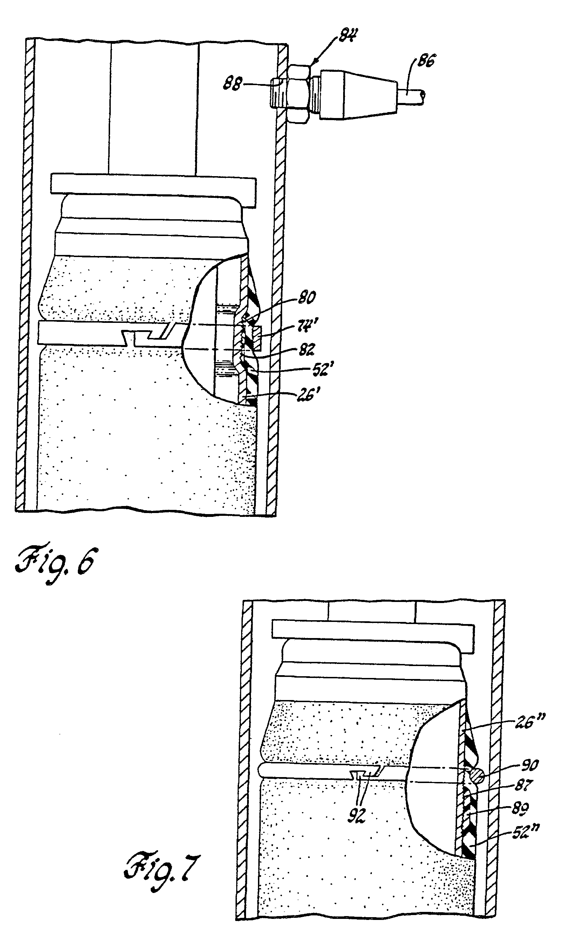

For conversion of a conventional strut, the elastomeric sleeve can be installed as explained above in relation to Figures 1 to 5. In the clamping arrangement of Figure 6, a support tube 26' constituted by a reservoir tube of a standard strut-type shock absorber to be converted to an air-adjustable unit is formed with a ridged annular groove 80 to accommodate the deflected material of an elastomeric air sleeve 52'. This groove construction assists in the retention of the sleeve on the support tube 26', to improve the conversion of the unit to an air spring unit. A thin annular layer 83 of a suitable adhesive and sealant may be used in the ridged annular groove 80 to improve the air sealing between the support tube 26 and the air sleeve. A clamp ring 74' corresponding to the clamp ring 74 of Figure 5 is installed as described above to secure the air sleeve to the support tube. A conventional air fitting 84 to receive an air line 86 such as is disclosed in US—A—3 332 708 is installed through an opening 88 in the dust tube for connection to a level control system.

Figure 7 shows a plastics anti-slip ring 89 that is installed between the air sleeve 52″ and a ridged section 87 of the support tube 26″. A wire clamp ring forming a retainer 90 of circular cross-section and having interlocking hooked ends 92 generally like those of the clamp ring 74 is installed with the pliers 76 to secure the sleeve to the support tube formed by a reservoir tube of the strut.

A vehicle suspension strut in accordance with the present invention permits improved service, since the strut does not have to be removed from the vehicle. Also, because the upper mount is returned to its original position, and camber adjustment bolts are not disturbed, subsequent wheel alignment is not normally required. Furthermore, the invention provides for the repair of an air spring-assist strut using simple hand tools and components as described, as well as air strut components. In the service position, other work can be performed on the strut, including changing strut cartridges or converting the strut from a wet-build unit to a cartridge unit as described in the US—A—4 276 971 referred to above.

Claims

1. A method of servicing an air spring suspension strut (10) having hydraulic shock absorber components operatively mounted in a support tube (26), the strut having a piston and piston-rod assembly (31, 34) and a dust tube (50) connected to the piston rod (34) and extending around the support tube (26), and an air spring comprising a sleeve (52) of elastomeric material having one end connected to the support tube (26) by first encircling clamp means (54) and the other end connected to the dust tube (50) by second encircling clamp means (60), which method includes the steps of: releasing the second clamping means (60) from connection of the air sleeve (52) to the dust tube (50), removing the dust tube (50) from the strut (10) and the lower end of the air sleeve (52) to uncover the first clamp means (54), releasing the first clamp means (54) from connection of the air sleeve (52) to the support tube (26), removing the air sleeve (52) from the strut (10), inserting a replacement air sleeve (72) on the strut (10) with the inner end of the sleeve (72) disposed around the support tube (26), clamping the inner end of the replacement air sleeve (72) around the support tube (26) so that it is connected in an air-tight manner to the support tube (26), re-installing the dust tube (50) on the strut (10), extending the air sleeve (72) so that the sleeve (72) extends around the lower end of the dust tube (50), and clamping the outer end of the replacement air sleeve (72) around the dust tube (50) so that the sleeve (72) is attached to the dust tube (50) in an air-tight manner, characterised in that the dust tube (50) is connected to the piston rod (34) by an elastomeric jounce bumper assembly (44) slidably seated upon the piston rod; and, to service the air spring suspension strut (10) without the complete removal of the strut from a vehicle in which it is installed, the method includes: disconnecting an upper mount (36) of the suspension strut (10) from the vehicle body; telescopic collapsing of the suspension strut (10) to free said upper mount (36) from the vehicle body; pivoting the suspension strut (10) about a ball-joint mounting (20) on a spindle and hub assembly (12) of the vehicle on which the support tube is mounted, until a service position is reached; removing the upper mount (36) from the piston rod 34; severing the second clamping means (60) with a cutting tool (70); slidably removing the dust tube (50) and the elastomeric jounce bumper assembly (44) axially from the piston rod (34); severing the first clamping means (54) with said cutting tool (70); clamping the inner end of the replacement air sleeve (72) around the support tube (26) with an inner clamp means (74) installed with hand tools (76); slidably reinstalling the dust tube (50) and the elastomeric jounce bumper assembly (44) on the piston rod (34); clamping the outer end of the replacement air sleeve (72) around the dust tube (50) with outer clamp means; reattaching the upper mount (36) to the piston rod 34; pivoting the suspension strut (10) back into its original position on the vehicle; and re-connecting said upper mount (36) of the suspension strut (10) to the vehicle body.

2. A method of servicing the air spring suspension strut (10) according to Claim 1, characterised in that the inner clamp means is a resilient split clamp ring (74; 74'; 90) having hooked ends (78; 92) which interlock with one anothsr on constriction of the clamp ring (74; 74'; 90) around the inner end of the replacement air sleeve by means of said hand tools (76).

## Patentansprüche

1. Wartungsverfahren für ein Federbein (10) mit Luftfeder, wobei Komponenten eines hydraulischen Stoßdämpfers betriebsfähig in einem Trägerrohr (26) montiert sind, das Bein eine Anordnung aus Kolben und Kolbenstange (31, 34), ein Staubrohr (50), das mit der Kolbenstange (34) verbunden ist und sich um das Trägerrhor (26) herum erstreckt, und eine Luftfeder besitzt, die eine Hülse (52) aus elastomerem Material enthält, deren eines Ende mit dem Trägerrohr (26) durch erste umfassende Klammermittel (54) verbunden ist und deren anderes Ende durch zweite umfassende Klammermittel (60) mit dem Staubrohr (50) verbunden ist, und wobei das Verfahren folgende Schritte umfaßt:

Lösen der zweiten Klammermittel (60) der Verbindung der Lufthülse (52) zum Staubrohr (50), Entfernen des Staubrohres (50) vom Bein (10) und dem unteren Ende der Lufthülse (52), um die ersten Klammermittel (54) freizulegen, Lösen der ersten Klammermittel (54) der Verbindung der Lufthülse (52) zum Trägerrohr (26), Entfernen der Lufthülse (52) vom Bein (10), Einsetzen einer Ersatzlufthülse (72) am Bein (10), wobei das innere Ende der Hülse (72) um das Trägerrohr (26) angeordnet ist, Klammern des inneren Endes der Ersatzlufthülse (72) um das Trägerrohr (26), so daß es in luftdichter Weise mit dem Trägerrohr (26) verbunden ist, Wiedereinsetzen des Staubrohres (50) am Bein (10), Ausdehnen der Lufthülse (72), so daß sich die Hülse (72) um das untere Ende des Staubrohres (50) erstreckt, und Klammern des äußeren Endes der Ersatzlufthülse (72) um das Staubrohr (50), so daß die Hülse (72) an dem Staubrohr (50) in luftdichter Weise befestigt ist, dadurch gekennzeichnet, daß das Staubrohr (50) mit der Kolbenstange (34) durch eine elastomere Stoßpufferanordnung (44), die gleitend auf der Kolbenstange sitzt, verbunden ist, und daß das Verfahren um das Federbein (10) mit Luftfeder zu warten ohne das Bein von Fahrzeug, in dem es installiert ist, komplett zu entfernen, folgendes umfaßt: Trennen einer oberen Halterung (36) des Federbeines (10) vom Fahrzeugkörper, teleskopisches Zusammendrücken des Federbeines (10), um die obere Halterung (36) vom Fahrzeugköper freizumachen, Schwenken des Federbeines (10) über eine Kugelgelenkeinrichtung (20) an einer Wellen- und Narbenanordnung (12) des Fahrzeuges, an der das Trägerrohr montiert ist, bis eine Wartungsposition erreicht ist, Entfernen der oberen Halterung (36) von der Kolbenstange (34), Durchtrennen der zweiten Klammermittel (60) mit einem Schneidwerkzeug (70), gleitendes Entfernen des Staubrohres (50) und der elastomeren Stoßpufferanordnung (44) axial von der Kolbenstange (34), Druchtrennen der ersten Klammermittel (54) mit dem Scheidwerkzeug (70), Klammern des inneren Endes der Ersatzulufthülse (72) mit einem inneren Klammermittel (74), das mit Handwerkzeug installiert wird, um das Trägerrhor (26), Wiedereinsetzen des Staubrohres (50) und der elastomeren Stoßpufferanordnung (44) gleitend auf der Kolbenstange (34), Klammern des äußeren Endes der Ersatzlufthülse (72) mit äußeren Klammermitteln um das Staubrohr (50), Wiederanbringen der oberen Halterung (36) an der Kolbenstange (34), Zurückschwenken des Federbeines (10) in seine Ausgangsposition am Fahrzeug und Wiederverbinden der oberen Halterung (36) des Federbeines (10) mit dem Fahrzeugkörper.

2. Wartungsverfahren für ein Federbein (10) mit Luftfeder nach Anspruch 1, dadurch gekennzeichnet, daß das innere Klammermittel ein federnder, geteilter Klammerring (74; 74'; 90) mit hakenförmigen Enden (78; 92) ist, die bei Kontraktion des Klammerringes (74; 74'; 90) durch Mittel des Handwerkzeuges um das innere Ende der Ersatzlufthülse ineinander einhaken.

## Revendications

1. Procédé d'entretien d'une jambe de suspension à ressort pneumatique (10) comprenant des composants d'un amortisseur hydraulique montées fonctionnellement dans un tube porteur (26), la jambe comprenant un ensemble piston et tige de piston (31, 34) et un tube protecteur (50) fixé à la tige de piston (34) et qui s'étend autour du tube porteur (26), un ressort pneumatique qui comprend un manchon (52) en matière élastomère dont une extrémité est reliée au tube porteur (26) par des premiers moyens de serrage encerclants (54) tandis que son autre extrémité est reliée au tube protecteur (50) par des deuxièmes moyens de serrage encerclants (60), procédé qui comprend les phases consistant à: enlever les deuxièmes moyens de serrage (60) pour supprimer la fixation du manchon pneumatique (52) sur le tube protecteur (50), séparer le tube protecteur (50) de la jambe (10) et de l'extrémité inférieure du manchon pneumatique (52) pour découvrir les premiers moyens de serrage (54), enlever les premiers moyens de serrage (54) pour supprimer la fixation du manchon pneumatique (52) sur le tube porteur (26), séparer le manchon pneumatique (52) de la jambe (10), mettre un manchon pneumatique de rechange (72) en place sur la jambe (10), avec l'extrémité intérieure du manchon (72) disposée autour du tube porteur (26), serrer l'extrémité intérieure du manchon pneumatique de rechange (72) autour du tube porteur (26) de telle manière qu'il soit fixé au tube porteur (26) à joint étanche à l'air, remonter le tube protecteur (50) sur la jambe (10), dilater le manchon pneumatique (72) de manière que le manchon (72) s'ètende autour de l'extrémité inférieure du tube protecteur (50), et serrer l'extrémité extérieure du manchon pneumatique de rechange (72) autour du tube protecteur (50) de manière que le manchon (72) soit fixé au tube protecteur (50) à joint étanche à l'air, procédé caractérisé en ce que le tube protecteur (50) est fixé à la tige de piston (34) par un ensemble tampon de compression en élastomère (44), monté coulissant sur la tige de piston; et pour entretenir la jambe de suspension à ressort pneumatique (10) sans avoir à séparer entièrement la jambe du véhicule sur lequel elle est montée, et où ce procédé comprend les phases consistant à: désassembler la fixation supérieure (36) de la jambe de suspension (10) de la caisse du véhicule; contracter télescopiquement la jambe de suspension (10) pour dégager cette fixation supérieure (36) de la caisse du véhicule; rabattre la jambe de suspension (10) autour de sa fixation à rotule (20) sur l'ensemble fusée et moyeu (12) du véhicule sur lequel le tube porteur est monté, jusqu'à ce qu'on ait atteint la position d'entretien; séparer la fixation supérieure (36) de la tige de piston (34);

couper les deuxièmes moyens de serrage (60) avec un outil tranchant (70); enlever le tube protecteur (50) et l'ensemble tampon de compression en élastomère (54) de la tige de piston (34) en les faisant coulisser axialement; couper les premiers moyens de serrage (54) à l'aide de cet outil tranchant (70); serrer l'extrémité intérieure du manchon pneumatique de rechange (72) autour du tube porteur (26) avec des moyens de serrage intérieurs (74) que l'on monte à l'aide d'outils à main (76); remonter le tube protecteur (50) et l'ensemble tampon de compression en élastomère (44) sur la tige de piston (34) par coulissement serrer l'extrémité extérieure du manchon pneumatique de rechange (72) autour du tube protecteur (50) à l'aide de moyens de serrage extérieurs; refixer la fixation supérieure (36) sur la tige de piston (34), replacer la jambe de suspension (10) à sa position initiale suc le véhicule par un basculement; et réassembler la fixation supérieure (36) de la jambe de suspension (10) à la caisse du véhicule.

2. Procédé d'entretien d'une jambe de suspension à ressort pneumatique (10) selon la revendication 1, caractérisé en ce que les moyens de serrage intérieurs sont constitués par une bague de serrage élastique fendue (74; 74'; 90) munie d'extrémités (78; 92) recourbées en crochets qui se verrouillent l'une dans l'autre lorsqu'on resserre la bague de serrage (74; 74'; 90) autour de l'extrémité extérieure du manchon pneumatique de rechange à l'aide de ces outils à main (76).

Fig.1

Fig. 2

Fig. 3

Fig. 4

Fig. 5

*Fig. 6*

*Fig. 7*